# EUROPÄISCHE PATENTANMELDUNG

(11) **EP 0 791 545 A2**
(43) Veröffentlichungstag der Anmeldung: **27.08.1997**
(21) Anmeldenummer: 97102750.3
(22) Anmeldetag: 20.02.1997
(51) Int. Cl.: B65F 1/10

(54) **Containereinhausung mit Aufnahmeschleuse**

(30) Priorität: 24.02.1996 DE 29603434 U
(71) Anmelder: Zwickauer Werkzeug- und Sondermaschinenbau GmbH WESOMA, 08056 Zwickau (DE)
(72) Erfinder: Trautner, Günter, 76571 Gaggenau (DE); Zippel, Stefan, 08412 Werdau (DE); Kaden, Klaus, 08056 Zwickau (DE)
(74) Vertreter: Rohrschneider, Gottfried

(57) **Zusammenfassung**

Die Erfindung betrifft eine Containereinhausung mit einer Aufnahme- und Entsorgungsschleuse (2) welche mit einer Steuerungs-Elektronik-Einheit (2.9) und einer netz- sowie standortunabhängigen Stromversorgungsanlage (3) derart ausgestattet ist, daß sie als gebührenpflichtige Anlage mit einem Wert-Chip-System betrieben werden kann. Dabei ist die Aufnahme- und Entsorgungsschleuse (2) konstruktiv derart ausgestattet, daß sie im Zusammenwirken mit der Steuerungs-Elektronik-Einheit (2.9) entsprechend des Wert-Chip-Systems zuverlässig immer nur eine Bedienungshandlung ermöglicht, welche über eine Display-Anzeige (2.5) in der Frontplatte (2.4) mit ihren kontrollierenden Angaben der Bedienung und der Verrechnung registriert sowie für den Benutzer kenntlich macht.

## Beschreibung

Die Neuerung betrifft eine Containereinhausung mit gebührenpflichtig ausgebildeter Aufnahmeschleuse, welche als komplexe Systemlösung ausgeführt ist, wozu sie eine intelligente elektronische Steuerung für die einzelnen Schritte der Bedienung der Schleuse besitzt sowie mit eigener Stromversorgung ausgestattet ist und dadurch netz- wie auch standortunabhängig ist. Die neuerungsgemäße Containereinhausung ist für vorzugsweise standardisierte Container mit entsprechenden Vorzugsgrößen sowohl in der Umhausung eines einzelnen, als auch mehrerer Container in modularer Bauart ausgeführt. Das Hauptanwendungsgebiet der gebührenpflichtig ausgebildeten Containereinhausungen ist die Müll- und Abfallentsorgung besonders in Wohnballungsgebieten. Jedoch erfolgt ihr Einsatz auch für die gebührenpflichtige sichere Verwahrung von Waren oder Gütern. Gemeinsames Merkmal jeder Ausführung ist jeweils ein Wert-Chip-System, welches dem Benutzer den Zugang zum Container über eine Aufnahme- beziehungsweise Entsorgungsschleuse ermöglicht.

Bisher ist mit der DE G 94 04 562 eine Lösung bekannt, welche einen im wesentlichen geschlossenen Sammelcontainer beschreibt, der für Wertstoffe und gefährliche Substanzen geschaffen wurde und der mit wenigstens einer Einfüllöffnung ausgestattet ist, die durch eine Schwenkmulde verschlossen wird. Dabei besitzt die Schwenkmulde eine Verschlußklappenseite und eine Lagerplattenseite, welche in einem Winkel von 110° bis 140° aneinander anschließen. Dabei ist die Schwenkmulde im Bereich der Anschlußkante der Verschlußklappenseite und der Lagerplattenseite gelenkig an der Wand des Sammelcontainers angeordnet. Im Bereich der Frontseite besitzt der Sammelcontainer ferner eine großflächig angeordnete Tür, in welcher im oberen Bereich die Einfüllöffnung ausgenommen ist. Zudem besitzt die freie Randkante der Lagerplattenseite eine Beschwerung, wodurch der Entleervorgang erleichtert werden soll.

Dieser Lösung haftet jedoch der Nachteil an, daß sie für jedermann beliebig frei zugängig ist, wodurch keinerlei Kontrollmöglichkeit über die Berechtigung der benutzenden Personen und den Umfang der Benutzung gegeben ist. Auch ist sie durch ihre technisch-konstruktive Ausführung in Form einer hohen Vorderkante nach Türöffnung nicht in der Lage, beispielsweise einen Container aufzunehmen, welcher nach seiner Füllung entnommen werden muß. Dieser Container müßte sowohl bei der Einbringung, als auch bei der Entnahme zum Leervorgang jeweils umständlich herausgehoben werden.

Ferner ist mit der DE 94 07 814 die Lösung eines weiteren Abfallbehälters bekannt, welcher dem Prinzip nach lediglich einen fest angeordneten Aufsatz auf einem Abfallbehälter beinhaltet, der mit entsprechender Bedienvorrichtung ausgestattet ist. Diese Lösung stellt somit keine zweckmäßige Containereinhausung dar, mittels welcher vorzugsweise standardisierte Container kontrolliert bedient und entsorgt werden können. Diese neuerungsgemäße Lösung bedient sich einer Abfall-Einfüllkammer innerhalb eines stationären, an der Oberseite eines Abfallbehälterdeckels befestigten Gehäuses, welches eine erste, mittels eines Deckels verschließbare Öffnung aufweist, die in der ersten Stellung der Einfüll- und Entleeröffnung gegenüberliegt, und einer zweiten Öffnung, die oberhalb der Öffnung im Abfallbehälterdeckel angeordnet ist, wobei die Einfüll- und Entleeröffnung andererseits in der zweiten Stellung der Öffnung im Abfallbehälterdeckel gegenüberliegt. Die Einfüllkammer funktioniert dabei radial drehend, durch Schwenkung des Aufnahme- und Entleerungselementes um eine horizontale Hauptachse "X".
Die Vorrichtung besitzt mehrere Betätigungselemente , wobei mit einem der Aufnahme- und Entleerungsmechanismus bedient wird und ein davon getrennt weiteres Betätigungselement als bis zu 170° schwenkendes Streichorgan zur Verteilung des Abfalls gleichmäßig im Abfallbehälter, arbeitet.

Dieser Lösung haftet der Nachteil an, daß die neuerungsgemäße Vorrichtung nicht in der Lage ist, eine hinreichend kontrollierte Entsorgung von standardisierten und hauptsächlich im Einsatz befindlichen Containern zu bewirken. Auch ist sie durch mehrere Bedienelemente benutzerunfreundlich, da der Bediener noch zusätzlich das zu entsorgende Gut mit mindestens einer Hand zu bewegen hat. Wenn dann auch noch ein Entwertungssystem hinzukommt, auch wenn dessen Lösung nicht aufgezeigt ist, muß von einer praxisfernen Anordnung gesprochen werden. Außerdem muß das zu entsorgende Gut mit der Einfüllkammer erst über die Hauptachse "X" gehoben werden, um darauf folgend in den Abfallbehälter entsorgt werden zu können. Dies stellt eine unnötige Erschwernis dar.

Aufgabe der Neuerung ist die Schaffung eines modularen Containereinhausungssystems, welches je nach modularer Kombination eine oder mehrere Aufnahmeschleusen besitzt, welches netz- und standortunabhängig ist, also dadurch an beliebigen Standorten zum Einsatz, beziehungsweise zur Aufstellung gelangen kann; durch ihre Ausführung eine vandalismusgeschützte Einlagerung von Gütern und Wertstoffen ermöglicht, wie beispielsweise wertvolle Alttextilien, hochwertige Restmaterialien, Alt-Unterlagen und dergleichen, aber andererseits eine mengen- und damit leistungsgerechte Entsorgung von vorzugsweise eingebeuteltem Restmüll durch das eingebaute, integrierte Zahlungs- und Abbuchungssystem sowie durch die gesamte hochwertige Ausführung langlebig, trotzdem relativ kostengünstig, robust und stabil, standsicher und optisch gestalterisch vorteilhaft ist, bei einer angenehm ergonomisch gut durchdachten und leichten Bedienweise.

Die Aufgabe der Neuerung wird gelöst, durch die im kennzeichnenden Teil des Punktes 1 aufgezeigten technischen Merkmale.
Das neuerungsgemäße Containereinhausungssystem besteht aus einem tragenden Konstruktionsgerüst mit einer dauerhaften, langlebigen Oberflächenveredlung aus vorzugsweise verzinktem Profilstahl, einer dauerhaft in das tragende Gerüst eingearbeiteten Verkleidung in Form einer Beplankung aus recycelten Wertstoffen mit naturbelassener, mechanisch bearbeiteter, folienkaschierter, wie auch farbbehandelter, oder anderweitig beschichteter Oberfläche; einer zu der, beziehungsweise den Bedienseiten hin geneigten horizontalen Abdeckung aus ebenso recycelten Wertstoffplatten, vorzugsweise Edelstahl, oder anderen vergleichbar überdurchschnittlich langlebigen, verschleißfesten Wertstoffen, die selbst bei extremen Witterungseinflüssen über eine überdurchschnittliche Selbstreinigung verfügen. Die horizontale, leicht geneigte Abdeckung ist derart gestaltet, daß sie über dem horizontalen Türbereich zur Entnahme des eingestellten Norm-Containerbehälters nach oben um etwa 30° bis 60° geschwenkt werden kann. Das Halten der Deckelkonstruktion erfolgt mittels eingestellten, sorgfältig ausgewogenen Gasdruckfedern, oder auch alternativ an sich bekannten mechanischen Rastern, beziehungsweise Haltevorrichtungen.
Die Tür, beziehungsweise die Türen bei modularer Bauart und die darüberliegenden, abgesenkten Deckelkonstruktionen in geschlossenem Zustand, werden mit jeweils nur einem hochwertigen Sicherheits-Schließsystem verschlossen und verriegelt.

Aufgrund des modularen Systems, sind in der jeweiligen Containereinhausung, die aus kombinierbaren Einzelmodulen bestehen, die unterschiedlichen genormten Containergrößen einstellbar. Zur Erreichung einer optimalen Befüllung der eingestellten unterschiedlichen Containerbehältergrößen, befinden sich in der oberen, zum Bediener geneigten Abdeckung, ein bis vier Öffnungen für die Aufnahme- beziehungsweise Entsorgungsschleusen.
Die Aufnahme- und Entsorgungsschleuse besteht aus einem, fest mit der oberen Abdeckung von innen verschraubten Gehäuse aus vorzugsweise Edelstahl, oder einem anderen vergleichbarem hochwertigen, langlebigen, korrosionsbeständigem Material. Die vorderen Kanten sind in der Vertikalen lotrecht gerade geschnitten und in der Horizontalen verletzungsmeidend rundkantig nach innen umgelegt. Der weitere Verlauf der Kammer ist horizontal waagerecht und dann folgend, um etwa 30° bis 50° nach hinten zur Abdeckung geneigt. Die vertikale Frontseite ist im Gehäuse etwa um 60 bis 100 mm zurückgesetzt, um einen Regen-, Schnee- und Schmutzschutz zu erreichen. Die vertikale Frontseite ist gegliedert in einen festen Teil mit der dahinterliegenden Steuer-Elektronik-Einheit und im sichtbaren Teil mit einer Display-Anzeige sowie dem Aufnahmeschlitz für den Wert-Chip. Als oberen Abschluß der vertikalen Frontseite besitzt die aufgesetzte Aufnahme- und Entsolgungsschleuse eine vordere Schleusenwand mit einem Handhabungselement zum Öffnen und Schließen der Aufnahmeschleuse, die im wesentlichen aus zwei im Winkel von 141° bis 145° zueinanderstehenden horizontalen Schleusenwänden bestehen, die seitlich vertikal Aufnahmebleche für Verriegelungs-, Schalt-, Rast-, Puffer- und andere Funktionselemente besitzen. Die vordere geöffnete, an der Bedienseite aufliegende horizontale Schleusenwand, ist im Verlaufe des Schwenkradius nach oben so verlagert, daß sich in der Stellung zur hinteren horizontalen Schleusenwand eine unsymmetrische Aufnahmekammer bildet. Die Gestaltung dieser Kammer - vordere obere Kante zu hinterer unterer Haubenkante - schließt im halbgeöffneten/ halbgeschlossenen Zustand Befüllungsmanipulationen weitgehenst aus. Die Schleusenkammer schwenkt um die beidseitig an der Vorderkante verdeckt befindlichen axialen Lager, bzw. als Lager ausgebildete Scharnierkonstruktionen.
Die Verarbeitung aller zum Betrieb des Systems notwendigen Informationen, erfolgt in einer, in der rechten Seite des Schleusenkammer-Gehäuses geschützt, von außen unzugänglich untergebrachten Steuerungs-Elektronik-Einheit, welche servicefreundlich über Steckeinheiten für den Havariefall ausgetauscht werden kann. Diese Steuerungs-Elektronik-Einheit hat nach außen hin zum Bedienenden eine sichtbare Display-Anzeige und einen Aufnahmeschlitz für einen Wert-Chip, der nach Einführung als zum System gehörend erkannt werden muß. Er ist vorzugsweise so ausgestattet, daß im Falle einer unrechtmäßigen Benutzung durch falsche oder ungültige Wert-Chips eine Anzeige "FEHL" erfolgt. Im Falle der richtigen Eingabe eines gültigen Wert-Chips wird der vorhandene Restwert des Wert-Chip angezeigt, der zeitgesteuert beim Nichtbedienen der Aufnahmeschleuse erlischt und dabei den Wert-Chip zur Entnahme freigibt, oder bei Anzeige eine Öffnung erfolgt, mit gleichzeitiger Abbuchung eines für die derzeitige Periode programmierten Wertes vom Wert-Chip-Wert. Nach erfolgter Schließung der Aufnahmeschleuse, die die Steuerung erkennt, wird der Wert-Chip zur Entnahme freigegeben. Manipulationen mit noch nicht vollständig geschlossener Aufnahmeschleuse bewirken weitere Abbuchungen vom Wert-Chip. Ein ermitteltes Container-Aufnahmevolumen welches in der Steuerung programmiert ist, läßt bei Erreichung desselben nach eingeführtem Wert-Chip "FULL" im Display anzeigen. Nach Öffnung des Moduls erscheint auch ohne Wert-Chip die Anzeige der Bewegung der Aufnahmeschleuse im Display, die nach Schließung derselben auf "00,00" zurückgesetzt wird.
Der volumenbezogene abzubuchende Geldwert vom Wert-Chip ist bei Bedarf, beispielsweise einer Gebührenumstellung, in seiner Höhe codiert und gesichert umstellbar.
Zu jeder Aufnahmeschleuse gehört eine eigene elektronische Steuerungs-Elektronik-Einheit.

Die neuerungsgemäß zum modularen System gehörende eigene netz- und standortunabhängige interne Stromversorgung versorgt die Verbraucher, wie Steuerungs-Elektronik-Einheit, Display-Anzeige, Wert-Chip-Transport, Verriegelungs- und Entriegelungsmechanismen sowie Endschalter mit dem notwendigen Strom, der aus einer temperaturunempfindlichen Nickel-Cadmium-Batterie mit einer Kapazität von vorzugsweise 8 bis 24 Ah, bei einer Spannung von 12 V, die über einen Laderegler von einem Solarmodul, welches an einem Mast oberhalb des Systems befestigt ist, bei Bedarf nachgeladen wird.
Die hinreichend dimensionierte Nickel-Cadmium-Batterie gewährleistet auf Grund des sehr geringen Bedarfs der angeschlossenen Stromverbraucher auch bei längerem wetterbedingten Ausfall des Solarmoduls eine fehlerfreie Bedienung des Systems über mehrere Wochen hinweg.
Zu jeder Aufnahmeschleuse, wie auch zu jeder elektronischen Steuerung gehört eine eigene Nickel-Cadmium-Batterie und ein eigener Laderegler. Zu jedem Gesamt-System gehört jeweils nur ein Solarmodul entsprechender Dimensionierung.

Die Neuerung soll nachstehend an einem Ausführungsbeispiel näher erläutert werden. In den zugehörigen Zeichnungen zeigen:

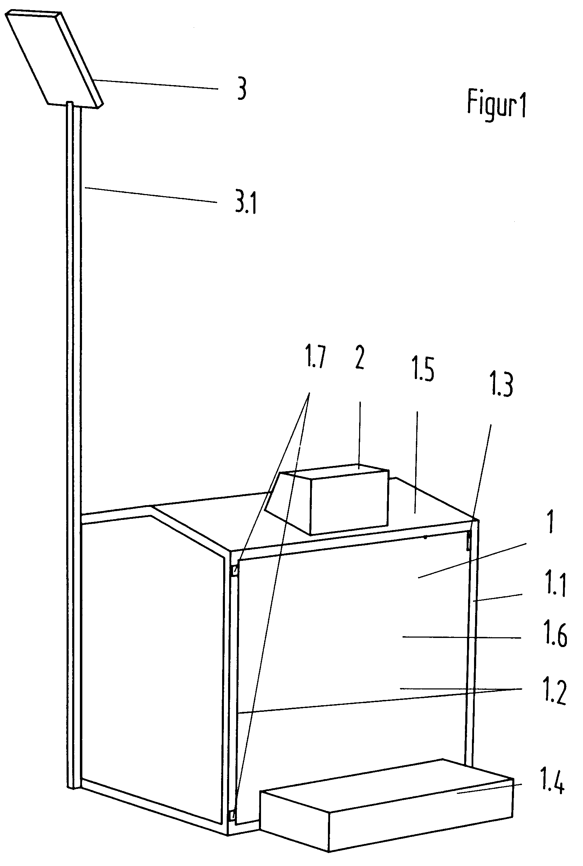

- Figur 1:: Schema eines System-Moduls

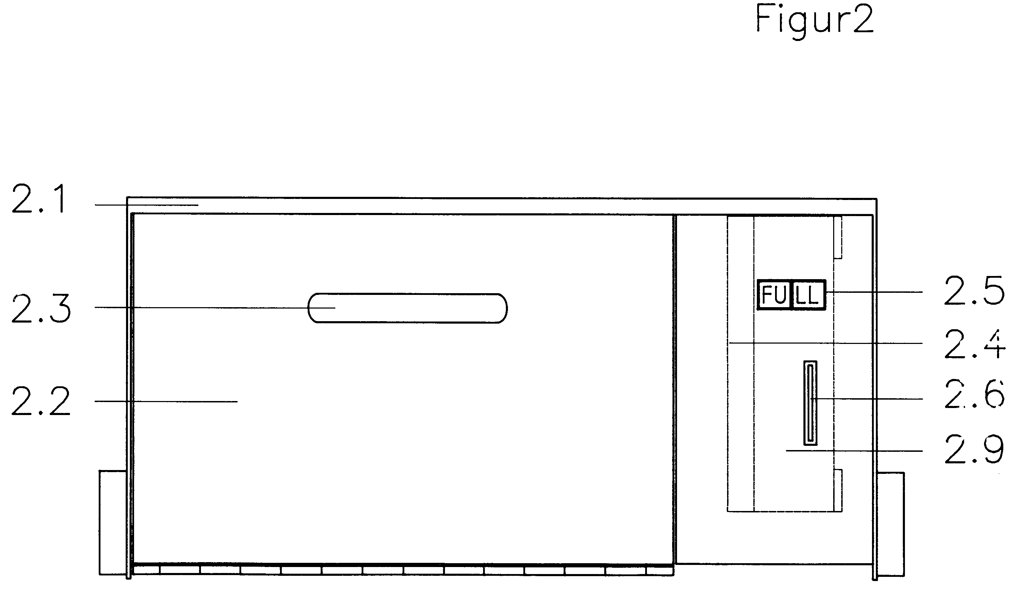

- Figur 2:: Vorderansicht der Aufnahme- und Entsorgungsschleuse

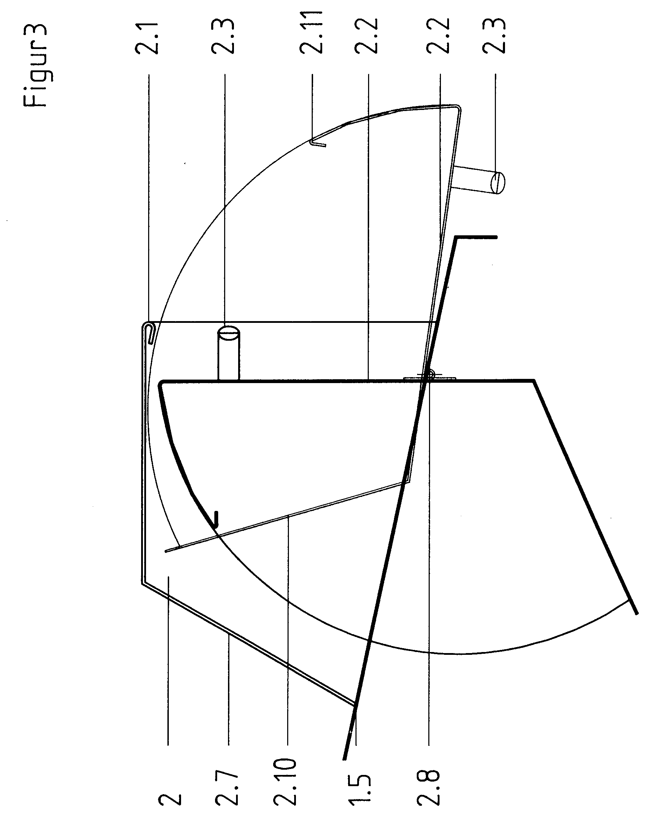

- Figur 3:: Schnitt der Aufnahme- und Entsorgungsschleuse

Eine Containereinhausung mit Aufnahmeschleuse besteht ihrem Prinzip nach aus den Baugruppen Containereinhausung 1, einer Aufnahme- und Entsorgungsschleuse 2 sowie einer Stromversorgung 3 mit einem Solarmodul. Weiterhin ist die Containereinhausung mit einer herkömmlichen Steuerungs-Elektronik-Einheit 2.9 ausgestattet, welche die einzelnen Handhabungen des Bedienenden durch Öffnen und Schließen der Aufnahme- und Entsorgungsschleuse 2 sowie auch die Buchung des Wert-Chips mit Sichtbarmachung über eine Display-Anzeige 2.5, steuert.
Die Containereinhausung 1 umfaßt ein tragendes Konstruktionsgerüst 1.1 als Skelett, eine vertikale Verkleidung 1.2 als Beplankung, ein Schließsystem 1.3 zur Sicherung gegen unbefugtes Öffnen, ein Bedienpodest 1.4 zur Erleichterung der Handhabungen bei der Benutzung, eine klappbare obere Abdeckung 1.5 zur Entnahme des vollen Containers.
Die Aufnahme- und Entsorgungsschleuse 2 ist von außen durch die Außenhaut 2.7 geschützt, welche als vorderen Abschluß eine obere Kante 2.1 aufweist, welche umgelegt ist. An der Frontseite 2.2 der vorderen Schleusenwand ist ein Handhabungselement 2.3 angeordnet, zur bequemen Bedienung der Aufnahme- und Entsorgungsschleuse 2. Diese besitzt eine abgewinkelte hintere Schleusenwand 2.10, von welcher letztlich das zu entsorgende Gut in den Container gelangt. Zur Gewährleistung einer sicheren Aufnahme des zu entsorgenden Gutes, wie auch der Vorbeugung von Manipulationen der Aufnahme- und Entsorgungsschleuse 2 dient eine Verlängerung 2.11 der vorderen Schleusenwand. Schließlich schwenkt die Aufnahme- und Entsorgungsschleuse 2 in ihrer aufgezeigten Gesamtheit um einen Drehpunkt 2.8, welcher gleichzeitig die Funktion eines Lagers ausübt.
Die Vorderfront der Containereinhausung 1 ist mit einer großflächigen Tür 1.6 ausgestattet, welche mit Scharnieren 1.7 versehen ist. Über diese Tür 1.6 in Zusammenhang mit dem Schließsystem 1.3 wird der Zugang zum Container selbst sowie der Zugang zur Steuerungs-Elektronik-Einheit 2.9, aber auch zur Stromversorgung mit Solarmodul 3 gewährleistet.
Die Containereinhausung 1 besitzt als oberen Abschluß die Abdekkung 1.5, welche bis zu etwa 60° schwenkbar ausgestattet ist. Die obere Abdeckung 1.5 wird dabei im oberen geöffneten Zustand von vorzugsweise Gasdruckfedern gehalten. Die auf der oberen Abdeckung 1.5 eingelassene und aufgesetzte Aufnahme- und Entsorgungsschleuse 2 besitzt neben ihrer vorderen Schleusenwand 2.2 eine Frontplatte 2.4. In diese Frontplatte 2.4 sind eine Display-Anzeige 2.5 zur Sichtbarmachung der einzelnen Angaben und Gebühren eingebracht, wie auch ein Aufnahmeschlitz 2.6 für einen Wert-Chip zur Benutzung und Inbetriebsetzung der Anlage. Hinter der Frontplatte 2.4 ist eine Steuerungs-Elektronik-Einheit 2.9 untergebracht, welche den ordnungsgemäßen Ablauf überwacht und die zugehörige Anzeige an der Display-Anzeige 2.5 gewährleistet.
Die Steuerungs-Elektronik-Einheit 2.9 wird gespeist von einer Stromversorgungsanlage 3, welche aus einem Solarmodul mit zugehörigem Mast 3.1 sowie einer Nickel-Cadmium-Batterie besteht, welche im Innenraum der Containereinhausung 1 seitlich untergebracht ist und eine ständige stabile Stromversorgung gewährleistet.

### Bezugszeichenaufstellung

- 1: - Containereinhausung
- 1.1: - tragendes Konstruktionsgerüst
- 1.2: - vertikale Beplankung
- 1.3: - Schließsystem
- 1.4: - Bedienpodest
- 1.5: - obere Abdeckung
- 1.6: - Tür/ Vorderfront
- 1.7: - Scharniere
- 2: - Aufnahme- und Entsorgungsschleuse
- 2.1: - obere Kante Aufnahme- und Entsorgungsschleuse
- 2.2: - Frontseite - vordere Schleusenwand
- 2.3: - Handhabungselement
- 2.4: - Frontplatte
- 2.5: - Display-Anzeige
- 2.6: - Aufnahmeschlitz
- 2.7: - Außenhaut Aufnahme- und Entsorgungsschleuse
- 2.8: - Lager-/ Drehpunkt Aufnahme- und Entsorgungsschleuse
- 2.9: - Steuerungs-Elektronik-Einheit
- 2.10: - hintere Schleusenwand
- 2.11: - Verlängerung vordere Schleusenwand
- 3: - Stromversorgung/ Solarmodul
- 3.1: - Mast Solarmodul

## Patentansprüche

1. Containereinhausung mit Aufnahmeschleuse dadurch gekennzeichnet, daß eine Containereinhausung (1), welche eine Aufnahme- und Entsorgungsschleuse (2) besitzt, mit einer Steuerungs-Elektronik-Einheit (2.9) sowie eigener netz- und standortunabhängiger Stromversorgungsanlage (3) durch vorzugsweise Nickel-Cadmium-Batterie und einem Solarmodul mit Mast (3.1) ausgestattet ist und mit einem Wert-Chip-System als gebührenpflichtige Anlage betrieben wird.

2. Containereinhausung mit Aufnahmeschleuse nach Punkt 1 dadurch gekennzeichnet, daß die Containereinhausung (1) ein tragendes Konstruktionsgerüst (1.1) mit vertikaler Beplankung (1.2) besitzt und eine etwa 60° schwenkbare obere Abdeckung (1.5) aufweist, in welcher die Aufnahme- und Entsorgungsschleuse (2) angeordnet ist.

3. Containereinhausung mit Aufnahmeschleuse nach Punkt 1 dadurch gekennzeichnet, daß die Vorderfront eine großflächige Tür (1.6) mit Scharnieren (1.7) besitzt, welche durch ein Schließsystem (1.3) gesichert ist.

4. Containereinhausung mit Aufnahmeschleuse nach Punkt 1 dadurch gekennzeichnet, daß am Fuße der Vorderfront (1.6) ein Bedienpodest (1.4) angeordnet ist.

5. Containereinhausung mit Aufnahmeschleuse nach Punkt 1 dadurch gekennzeichnet, daß die Aufnahme- und Entsorgungsschleuse (2) nach oben durch eine Außenhaut (2.7) gesichert ist, welche zur Frontseite (2.2) der vorderen Schleusenwand hin, eine obere Kante (2.1) aufweist, welche umgelegt ist.

6. Containereinhausung mit Aufnahmeschleuse nach Punkt 1 dadurch gekennzeichnet, daß die Frontseite (2.2) der vorderen Schleusenwand mit einem Handhabungselement (2.3) ausgestattet ist.

7. Containereinhausung mit Aufnahmeschleuse nach Punkt 1 dadurch gekennzeichnet, daß die Aufnahme- und Entsorgungsschleuse (2) mit einer abgewinkelten hinteren Schleusenwand (2.11) versehen ist und nach vorne eine Verlängerung der vorderen Schleusenwand (2.11) aufweist und um einen Drehpunkt (2.8) schwenkt, der zugleich das Lager der Aufnahme- und Entsorgungsschleuse (2) bildet.

8. Containereinhausung mit Aufnahmeschleuse nach Punkt 1 dadurch gekennzeichnet, daß die Aufnahme- und Entsorgungsschleuse (2) mit einer Frontplatte (2.4) ausgerüstet ist, welche eine Display-Anzeige (2.5) und einen Aufnahmeschlitz (2.6) für ein gebührenpflichtiges Wert-Chip-System mit Kontollanzeige aufnimmt.

9. Containereinhausung mit Aufnahmeschleuse nach Punkt 8 dadurch gekennzeichnet, daß im Innenraum der Containereinhausung (1) eine Steuerungs-Elektronik-Einheit (2.9) installiert ist, welche die einzelnen Schritte der Bedienung überwacht und über die Display-Anzeige (2.5) sichtbar macht.

10. Containereinhausung mit Aufnahmeschleuse nach Punkt 2 dadurch gekennzeichnet, daß die Containereinhausung (1) mit ihrer vertikalen Beplankung (1.2) und ihrer oberen Abdeckung (1.5) aus vorzugsweise recycelten Wertstoffmaterialien besteht.
